## Europäisches Patentamt
## European Patent Office
## Office européen des brevets

(11) Publication number: **0 112 073 B2**

(12) **NEW EUROPEAN PATENT SPECIFICATION**

(45) Date of publication of the new patent specification: 28.02.90

(51) Int. Cl.⁵: **G 21 C 13/06, F 16 L 55/12**

(21) Application number: 83307132.7

(22) Date of filing: 22.11.83

(54) Sealing cold leg nozzles of nuclear reactor pressure vessels.

(30) Priority: 15.12.82 US 450457

(43) Date of publication of application:
27.06.84 Bulletin 84/26

(45) Publication of the grant of the patent:
07.01.87 Bulletin 87/02

(45) Mention of the opposition decision:
28.02.90 Bulletin 90/09

(84) Designated Contracting States:
CH DE FR GB IT LI

(56) References cited:
EP-A-0 014 878
EP-A-0 102 492
DE-B-841 668
FR-A-2 259 419
FR-A-2 311 981
GB-A-1 059 262
GB-A-2 081 838
US-A-4 262 702
US-A-4 312 708
US-A-4 393 899

PATENTS ABSTRACTS OF JAPAN, vol. 4, no. 6(M-88),
18th January 1980

(73) Proprietor: THE BABCOCK & WILCOX COMPANY
1010 Common Street P.O. Box 60035
New Orleans Louisiana 70160 (US)

(72) Inventor: Dooley, Ray A.
Rte. No. 3, Box 630
Rustburg Virginia 24588 (US)

(74) Representative: Cotter, Ivan John
D. YOUNG & CO. 10 Staple Inn
London WC1V 7RD (GB)

EP 0 112 073 B2

## Description

This invention relates to apparatus for and methods of sealing cold leg nozzles of nuclear reactor pressure vessels, during maintenance and inspection of associated steam generators and pumps.

In a typical nuclear steam supply system, the nuclear reactor vessel, as well as steam generators and reactor coolant pumps, must be periodically inspected. During the inspection and maintenance of the reactor vessel itself, a closure head is removed from the top of the reactor vessel and the internals are removed from the interior of the vessel. The vessel and refuelling canal are filled with water to act as a radiological shield during servicing. In a once through steam generator of a type manufactured by The Babcock & Wilcox Company, heated water travels through the top of the steam generator during operation and leaves at the bottom thereof. Reactor coolant pumps pump the water back into the reactor through an entrance nozzle, known as a cold leg nozzle, which is situated in the same horizontal plane as the outlet nozzle. Thus, the introduction of water into the reactor vessel during inspection and maintenance procedures would result in flooding of the lower portion of the steam generators, the reactor coolant pumps, and associated piping leading up to the cold leg piping to permit maintenance and inspection of the reactor coolant pump and lower portions of the steam generator during the inspection period in which the reactor vessel and refuelling canal are filled with water. Such arrangements pose the threat of loosening or dislodgement of such a plug and flooding of the associated piping as indicated above.

Means for sealing or plugging pipelines in general are well known in the art, as shown for example by US Patent US-A-4 262 702 (Streich). However, such plugs are not suitable for a specialised application required by nuclear reactor maintenance and inspection.

Japanese Patent Application Publication JP-A-56 089 098 (and its corresponding US Patent US-A-4 393 899) describes apparatus for sealing openings of main steam pipes in a nuclear reactor vessel for maintenance and inspection while the pressure vessel and a refuelling canal are filled with water. The apparatus includes sealing plugs for mechanically sealing the openings from the inside of the reactor pressure vessel. An installation tool is suspended within the reactor vessel and carries the sealing plugs. The tool telescopes to insert the sealing plugs within the openings, and subsequently to remove the sealing plugs after the completion of maintenance operations. Each sealing plug includes an O-ring which is expanded during the sealing operation by compressed air fed through an air feed pipe connected to the O-ring.

According to one aspect of the present invention there is provided apparatus as defined in claim 1 for sealing a cold leg nozzle of a nuclear reactor pressure vessel during maintenance and inspection of reactor coolant pumps, steam generators, and associated piping while the pressure vessel and a refuelling canal are filled with water.

According to another aspect of the present invention there is provided a method as defined in claim 4 of sealing a cold leg nozzle of a nuclear reactor pressure vessel during maintenance and inspection of associated steam generators and reactor coolant pumps while the pressure vessel and a refuelling canal are filled with water.

The present invention described below provides a sealing plug which is reliable in operation and suitable for nuclear reactor inspection and maintenance procedures. It utilises the hydrostatic pressure created by water within the reactor pressure vessel to ensure a fail safe plug which will not dislodge in the event of failure of the primary plug sealing means. The method and apparatus, for plugging the cold leg nozzles of a nuclear reactor pressure vessel during maintenance and inspection of same, permits inspection and maintenance of the reactor coolant pumps, steam generators, and associated piping during the same period of time.

The invention will now be described, by way of illustrative and non-limiting example, with reference to the accompanying drawings, in which like reference numerals designate like or corresponding parts throughout, and in which:

Figure 1   is a perspective view of a nuclear steam supply system;

Figure 2   is a schematic side view of apparatus embodying the invention for installing a sealing plug;

Figure 3   is an end view of the sealing plug;

Figure 4   is a sectional view of the sealing plug taken along a line IV - IV of Figure 3;

Figure 5   is a plan view of an installation tool of the apparatus embodying the invention;

Figure 6   is a side view of the installation tool and an attached reaction beam; and

Figure 7   is an end view of a latch assembly of the apparatus embodying the invention.

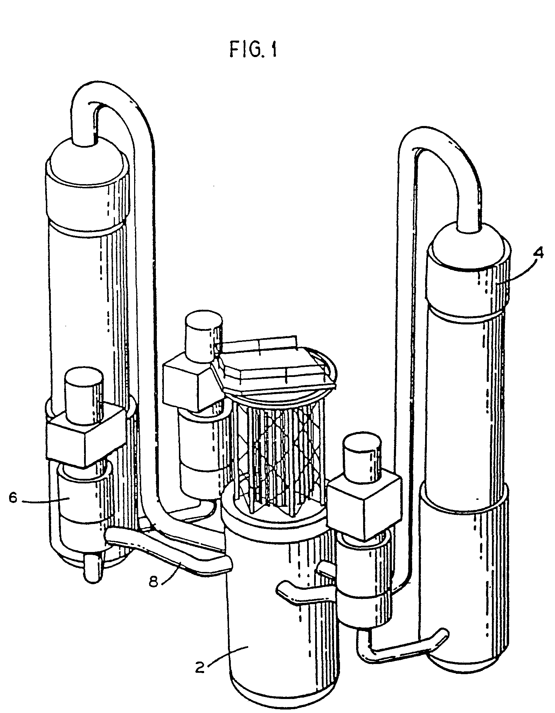

Figure 1 shows a nuclear steam supply system including a nuclear reactor pressure vessel 2, a once through steam generator 4 and a reactor coolant pump 6. In the system as illustrated, each of two reactor coolant loops contains two reactor coolant pumps, i.e. a total of four pumps, each feeding into the vessel 2 through a separate cold leg nozzle. The reactor coolant pump 6 is connected to the reactor vessel 2 by piping 8.

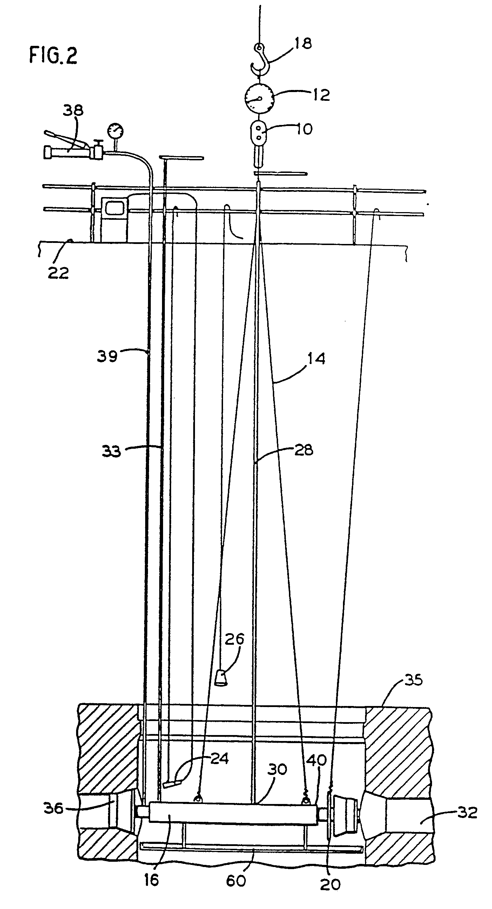

Referring now to Figure 2, a chain hoist 10, scales 12, a sling 14, and an installation tool 16 are attached to a chain hook 18. The chain hoist 10 is situated above the sling 14, and the scales 12 are situated above the chain hoist, as illustrated. A sealing plug 20 is attached to each end of the installation tool 16. This is accomplished on a fuel handling bridge walkway 22. Because the operator is remote from the actual site of insertion of the sealing plug 20, a television camera 24 and an underwater light 26 are utilised to facilitate insertion and removal of the sealing plug. A first drive socket extension 28 is attached to a reaction nut 30 in the centre of the installation tool 16.

The installation tool 16, now carrying a sealing plug 20 at each end thereof, is aligned with a diametrically opposite cold leg nozzle 32 of the vessel 2. The tool 16 is then lowered into the water-filled vessel 2 until it is in elevational alignment with the diametrically opposite cold leg nozzles. At this point in the procedure, the sealing plugs 20 will be in proper horizontal and vertical alignment for engagement in the cold leg nozzles 32.

The use of the scales 12 serves to establish a predetermined submerged weight for the installation tool 16, both with and without attached sealing plugs 20. Thus, an aberration in apparent weight of the installation tool 16 during the installation and subsequent removal of the sealing plugs 20 would indicate to an operator that one or both plugs either rests on a lower conical section of a cold leg nozzle 32 (abnormally low weight) or is pressed against an upper conical section of a cold leg nozzle (abnormally high weight). This would indicate to the operator that he should take appropriate action to correct the alignment of the installation tool 16. Turnbuckles or other adjusting means well known in the art may be used to adjust the sling 14, if necessary, to maintain the tool 16 in an essentially level condition.

Before submergence of the installation tool 16 with the attached sealing plugs 20, the first drive socket extension 28 is lowered until a socket end rests on an upper flange 35 of the vessel 2. The socket extension 28 is then marked with tape at a suitable reference elevation on the fuel handling bridge walkway 22. A second tape mark is added to the socket extension at a distance of 2.007 m (6 ft 7 in) above the first mark, and the first mark is then removed. The distance of 2.007 m (6 ft 7 in) is the distance between the upper flange 35 and the centreline of the cold leg nozzle 32 in this preferred embodiment. Therefore, when the installation tool 16 is lowered until the tape mark on the first drive socket extension 28 coincides with the reference elevation on the fuel handling bridge walkway 22, the sealing plugs 20 will be at the correct elevation for engagement into the nozzle 32. The chain hoist 10 may be used to effect any change in tool elevation.

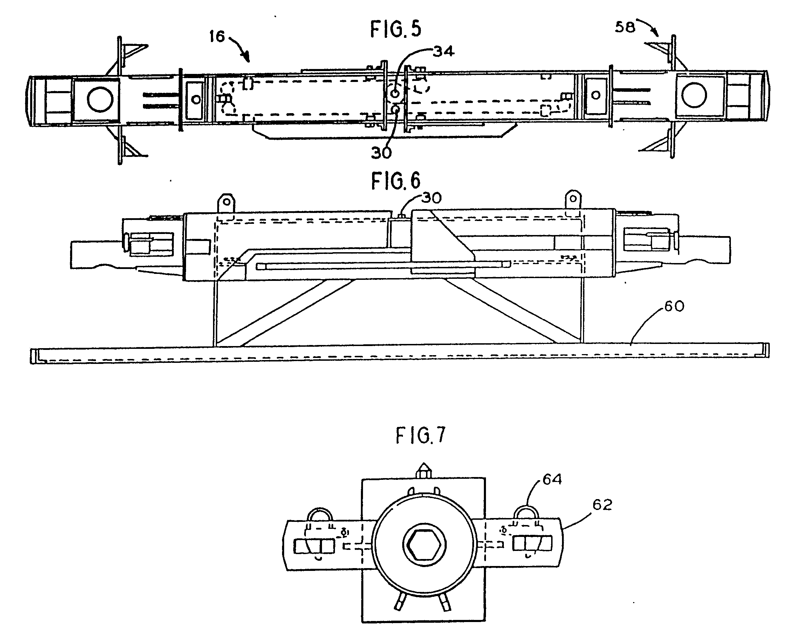

A second drive socket extension 33 is attached to a traverse nut 34 (see Figure 5) in the centre of the installation tool 16. Anticlockwise rotation of the traverse nut 34 results in insertion of the sealing plugs 20 into the cold leg nozzles 32. To prevent the installation tool 16 and attached sealing plugs 20 from rotating in an anticlockwise direction in a horizontal plane during rotation of the traverse nut 34, the first drive socket extension 28 is attached to the reaction nut 30 during this procedure.

After insertion of the sealing plugs 20 into respective cold leg nozzles 32, a hydraulic jack 36 is inserted into a sealing plug and pressurised by means of a hydraulic pump 38. The hydraulic jack 36 is supported by a pole 39 made of fibreglass or other suitable material, the jack being connected to the hydraulic pump 38 by lengths of hydraulic hosing. The jack 36 is pressurized while holding some torque on the traverse nut 34. After pressurisation of the hydraulic jack 36 is achieved, torque on the traverse nut 34 is released.

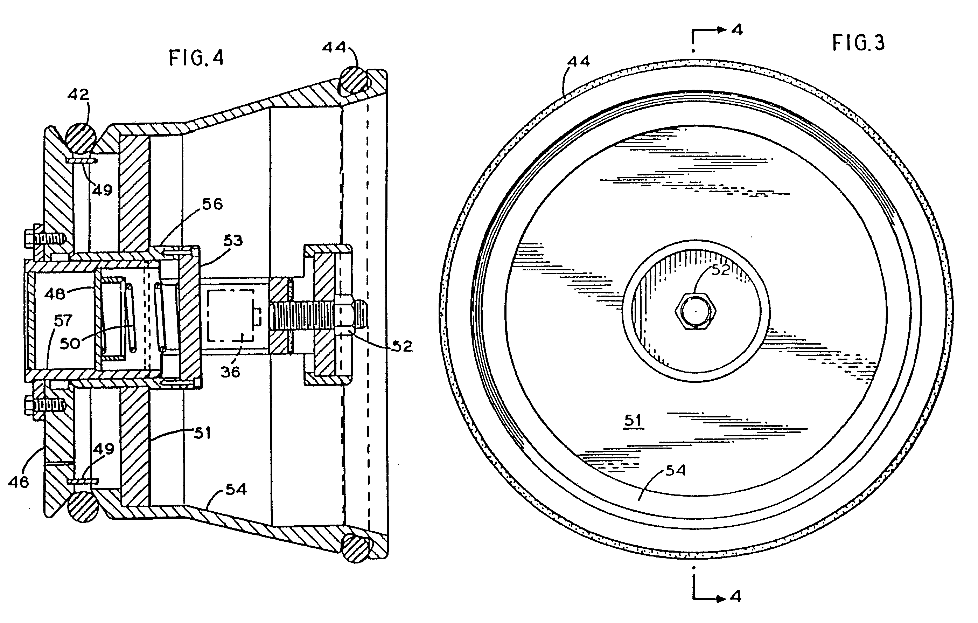

The hydraulic jack 36 serves to activate the sealing plug 20 and bring it in sealing relationship with the inside surface of the cold leg nozzle 32, as more fully described below. First, the drive socket extension 28 is removed from the reaction nut 30 and placed on a nut runner nut 40. The nut runner nut 40 is then turned clockwise to effectively lock the sealing plug 20 into a sealing relationship with the cold leg nozzle 32. The hydraulic jack 36 is retracted, removed, and inserted in the diametrically opposite sealing plug, and the procedure as described above is repeated. After both plugs 20 have been brought in sealing relationship with the inside diameters of respective cold leg nozzles 32, a nylon cord is used to release latches on each plug. The installation tool 16 may then be removed. After completion of maintenance and inspection, the installation tool 16 is again lowered into the vessel 2, and telescoped into latching relationship with the installed plugs 20. The hydraulic jack 36 is again inserted into each plug 20 in turn to allow release of sealing relationship of each plug 20 with the inside surface of its respective cold leg nozzle 32. The nut runner nut 40 is turned anticlockwise as part of this operation. The diametrically opposite plugs 20 are then withdrawn from their respective nozzles 32 by rotating the traverse nut 34 using the second drive socket extension 33. The installation tool 16, with the plugs 20 now reattached to the ends thereof, is now lifted out of the vessel 2. Figure 3 is an end view of the sealing plug 20. A hexagonal (hex) nut 52 is in communication with the nut runner nut 40 while the latter is being turned during the activation as well as the deactivation of the sealing plug.

Referring now to Figure 4, the sealing plug includes a primary O-ring 42, a secondary O-ring 44, an outer plate 46, a spring retainer 48, and a spring 50. Upon pressurising the hydraulic pump 38, the outer plate 46 is pulled in a direction towards the centre of the vessel 2. Directional control is provided by an outer pipe 56, an inner pipe 57 and a guide bar 49. Because a continuing pressure is being applied to the traverse nut 34 in the centre of the installation tool, no significant net movement of a cone assembly 54 can occur in a direction towards the centre of the vessel 2. The primary O-ring 42 therefore expands radially outwardly between bevelled edges of the outer plate 46 and cone assembly 54. The hex nut 52 is then turned, through communication with the nut runner nut 40, to lock the primary O-ring 42 into position. The spring 50 is thus in a compressed state during the period in which the primary O-ring 42 is in sealing relationship to the inside surface of the cold leg nozzle 32. A locater ring 51 and an end ring 53 remain in a stationary position during this procedure.

When the sealing plug is to be removed, the hydraulic pump 38 is again inserted into the plug and pressurized. The nut runner nut 40, in communication with the hex nut 52, is turned in an anticlockwise direction. The hydraulic jack 36 is retracted and removed. The spring 50 will force back the outer plate 46, thereby relieving pressure on the primary O-ring 42 and allowing it to return to its normal state. The sealing plug may then be removed from the cold leg nozzle 32 prior to resumption of operation.

As shown in both Figures 3 and 4, the secondary O-ring 44 is mounted near the widest edge of the cone assembly 54. The secondary O-ring 44 is designed to act as a sealing element in case of failure of the primary O-ring 42. Hydrostatic pressure would force the cone assembly 54 and the secondary O-ring 44 into tight communication with a bevelled section of the cold leg nozzle 32.

As best shown in Figures 5 and 6, the installation tool 16 utilises a continuous chain drive operated by rotation of the traverse nut 34 by means of the second drive socket extension 33. Thus, by turning the traverse nut 34 anticlockwise, the two principal members of the installation tool 16 will simultaneously telescope radially outwardly, as for example during insertion of the sealing plugs 20 into respective cold leg nozzles 32. Conversely, clockwise rotation of the traverse nut 34 results in simultaneous retraction of the telescoping members of the installation tool 16 in a radially inward direction, as for example during removal of the sealing plugs 20 from the respective nozzles 32. The installation tool 16 is also provided with a latch assembly 58, shown in more detail in Figure 7, which includes a latch plate 62 containing slots for the introduction of lugs (not shown), two of which lugs are arranged on a sealing plug 20. A latch 64 engages the sealing plug lug to provide attachment of the sealing plug 20 to each end of the installation tool 16 before insertion of the plugs into respective cold leg nozzles 32. After insertion, a nylon cord tied to the latch 64 is pulled up, releasing the lug from the latch and thereby permitting withdrawal of the installation tool 16 from the positioned plug 20. For removal of the plugs 20, the latch 64 is reconnected to the lug, if necessary with the aid of a drive socket extension.

Figure 6 is a side view of the installation tool, including a reaction beam 60.

During removal of the two oppositely disposed sealing plugs 20, if one of the plugs releases from the nozzle 32 while the oppositely disposed plug still maintains some resistance to the installation tool 16, it is necessary to have a means to react against the force exerted by the tool. The reaction beam 60 is slightly less in diametric length than the inside diameter of the vessel 2. In the event of a situation as described above, the reaction beam 60 will come in contact with the inner surface of the side wall of the vessel 2, and in arcuate alignment with the respective nozzle, so as to provide the reactive force.

The entire procedure described above relates to the positioning of two sealing plugs 20, one at each end of an installation tool, the plugs 'being inserted into diametrically opposite cold leg nozzles 32 and subsequently removed. In a typical vessel 2 such as illustrated in Figure 1, it is necessary to seal all four cold leg nozzles before maintenance and inspection may be started. Therefore, the procedures described above are repeated with respect to a third and fourth sealing plug and corresponding diametrically opposite cold leg nozzles.

Ancillary equipment may be used in conjunction with the illustrative form of practice of the invention described above. For example, a suitable lubricant may be used on the surfaces of the installation tool 16 that interface with the sealing plug 20 to facilitate the insertion and removal of the plug into the cold leg nozzle 32.

## Claims

1. Apparatus for sealing a cold leg nozzle (32) of a nuclear reactor pressure vessel (2) during maintenance and inspection of reactor coolant pumps, steam generators, and associated piping while the pressure vessel and a refuelling canal are filled with water, the apparatus comprising:

- a sealing plug (20) for mechanically sealing the cold leg nozzle (32) from the inside of the pressure vessel (2), the sealing plug including a primary O-ring (42) and a secondary O-ring (44);
- an installation tool (16) suspended or suspendable within the reactor vessel (2), the installation tool including a telescoping means arranged within a horizontal plane and carrying or capable of carrying the sealing plug (20) for insertion into 2 the cold leg nozzle (32), and for subsequent removal of the sealing plug after completion of maintenance operations;
- latching means (58) for attaching the sealing plug to the installation tool (16);
- hydraulic means to activate the sealing plug (20); and
- support means to suspend the installation tool (16) within the reactor vessel (20) during installation and removal of the sealing plug;

characterised in that:
the sealing plug (20) includes an outer plate (46), a cone assembly (54) and means (49, 56, 57) for allowing relative movement between the outer plate (46) and the cone assembly (54), the primary O-ring (42) being positioned between respective bevelled edges of the outer plate (46) and the narrower end of the cone assembly (54) such that relative movement therebetween causes the primary O-ring (42) to expand radially outwardly between the respective edges of the outer plate (46) and the cone assembly (54); and the secondary O-ring (44) is positioned near the wider end of the cone assembly so as to be located within the cold leg nozzle (32).

2. Apparatus according to claim 1, wherein the hydraulic means comprises a hydraulic jack (36) for providing relative movement between the outer plate (46) and the cone assembly (54), and a hydraulic pump (38) for pressurising the hydraulic jack.

3. Apparatus according to claim 1 or 2, wherein the telescoping means of the installation (16) is mechanically operable.

4. A method of sealing a cold leg nozzle (32) of a nuclear reactor pressure vessel (2) during maintenance and inspection of associated steam generators and reactor coolant pumps while the pressure vessel and a refuelling canal are filled with water, the method comprising:

- attaching a sealing plug (20) provided with a primary O-ring (42) and a secondary O-ring (44) to an end fo an essentially horizontally disposed installation tool (16) located above and in alignment with the reactor pressure vessel (2);
- lowering the installation tool (16) into the reactor pressure vessel (2) until the installation tool (16) and attached plug (20) are aligned with the cold leg nozzle (32);
- inserting the sealing plug (20) into the cold leg nozzle (32); and
- mechanically expanding the sealing plug (20) to effect a seal within a cylindrical portion of the cold leg nozzle (32);

characterised in that:
The sealing plug (20) includes an outer plate (46) and a cone assembly (54) which are movable relative to each other and are positioned on either side of the primary O-ring (42), relative movement between the outer plate (46) and the cone assembly (54) causing the primary O-ring (42) situated at the narrower end of the cone assembly to expand radially outwardly between respective bevelled edges of the outer plate (46) and the cone assembly (54) into contact with the cold leg nozzle (32); and the secondary O-ring (44) is positioned near the wider and of the cone assembly so as to be located within the cold leg nozzle (32).

**Patentansprüche**

1. Vorrichtung zur Abdichtung eines Kaltleitungszweigventils (32) eines Kernreaktor-Druckkessels (2) während der Wartung und Inspektion von Reaktorkühlmittelpumpen, Wasserdampfgeneratoren und damit verbundenen Leitungen, während der Druckkessel und ein Tankkanal mit Wasser gefüllt sind, wobei die Vorrichtung aufweist: einen Dichtungsstopfen (20) für mechanisches Abdichten des Kaltleitungszweigventils (32) von der Innenseite des Reaktordruckkessels (2), wobei der Dichtungsstopfen einen primären O-Ring (42) und einen sekundären O-Ring (44) enthält, ein in dem Reaktorkessel (2) aufgehängtes oder aufhängbares Installationswerkzeug (16), wobei das Installationswerkzeug eine Auszieheinrichtung enthält, die in einer horizontalen Ebene angeordnet ist und den Dichtungsstopfen (20) für das Einfügen in das Kaltleitungszweigventil (32) und für anschließende Entfernung des Dichtungsstopfens nach Beendigung der Wartungsarbeiten trägt oder tragen kann, Verriegelungseinrichtungen (58) zur Anfügung des Dichtungsstopfens an das Installationswerkzeug (16), hydraulische Einrichtungen zur Aktivierung des Dichtungsstopfens (20) und Trägereinrichtungen zur Aufhängung des Installationswerkzeuges (16) in dem Reaktorkessel (20) während der Installation und Entfernung des Dichtungsstopfens, *dadurch gekennzeichnet, daß* der Dichtungsstopfen (20) eine Außenplatte (46), einen Kegelaufbau (54) und Einrichtungen (49, 56, 57), die eine Relativbewegung zwischen der Außenplatte (46) und dem Kegelaufbau (54) erlauben, aufweist, wobei der primäre O-Ring (42) zwischen den entsprechenden abgeschrägten Kanten der Außenplatte (46) und dem schmaleren Ende des Kegelaufbaus (54) derart angeordnet ist, daß eine Relativbewegung zwischen diesen bewirkt, daß der primäre O-Ring (42) sich radial nach außen zwischen den entsprechenden Kanten der Außenplatte (46) und des Kegelaufbaues (54) ausdehnt; und daß der sekundäre O-Ring (44) in der Nähe des weiteren Endes des Kegelaufbaues angeordnet ist, so daß er innerhalb des Kaltleitungszweigventils (32) liegt.

2. Vorrichtung nach Anspruch 1, in der die hydraulische Einrichtung einen Hubzylinder (36), der eine Relativbewegung zwischen der Außenplatte (46) und dem Kegelaufbau (54) ergibt, und eine hydraulische Pumpe (38), die den Hubzylinder unter Druck setzt, aufweist.

3. Vorrichtung nach Anspruch 2, in der die ausziehbare Einrichtung des Installationswerkzeuges (16) mechanisch betätigbar ist.

4. Verfahren zur Dichtung eines Kaltleitungszweigventils (32) eines Kernreaktordruckkessels (2) während der Wartung und Inspektion damit verbundener Wasserdampfgeneratoren und Reaktorkühlpumpen, während der Druckkessel und ein Tankkanal mit Wasser gefüllt sind, unter Ansetzen eines mit einem primären O-Ring (42) und mit einem sekundären O-Ring (44) versehenen Dichtungsstopfens (20) an ein Ende eines im wesentlichen horizontal ausgerichteten Installationswerkzeuges (16), das oberhalb des Reaktordruckkessels (2) und mit diesem fluchtend angeordnet ist, Absenken des Installationswerkzeuges (16) in den Reaktordruckkessel (2), bis das Installationswerkzeug (16) und der angesetzte Stopfen (20) mit dem Kaltleitungszweigventil (32) fluchten, Einfügen des Dichtungsstopfens (20) in das Kaltleitungszweigventil (32) und mechanisches Ausdehnen des Dichtungsstopfens (20), um eine Dichtung in einem zylindrischen Abschnitt des Kaltleitungszweigventils (32) zu bewirken,
*dadurch gekennzeichnet, daß*
der Dichtungsstopfen (20) eine Außenplatte (46) und einen Kegelaufbau (54) enthält, die relativ zueinander bewegbar sind und auf beiden Seiten des primären O-Ringes (44) angeordnet sind, wobei eine Relativbewegung zwischen der Außenplatte (46) und dem Kegelaufbau (54) bewirkt, daß der primäre O-Ring (42), der am schmalen Ende des Kegelaufbaus liegt, sich zwischen entsprechenden abgeschrägten Kanten der Außenplatte (46) und des Kegelaufbaus (54) radial nach außen in Berührung mit dem Kaltleitungszweigventil (32) ausdehnt; und daß der sekundäre O-Ring (44) in der Nähe des weiteren Endes des Kegelaufbaues angeordnet wird, so daß er innerhalb des Kaltleitungszweigventils (32) liegt.

**Revendications**

1. Appareil de fermeture étanche d'un ajutage de branche froide (32) d'une cuve sous pression (2) de réacteur nucléaire au cours de l'entretien et de l'inspection de pompes de refroidissement du réacteur, générateurs de vapeur, et conduites associées lorsque la cuve sous pression et un canal de rechargement en combustible sont remplis d'eau, l'appareil comportant:

– un obturateur de fermeture étanche (20) pour assurer l'étanchéité de façon mécanique de l'ajutage de branche froide (32) à partir de l'intérieur de la cuve sous pression (2) du réacteur, l'obturateur de fermeture étanche comportant un joint torique primaire (42) et un joint torique secondaire (44);
– un outil de montage (16) suspendu ou pouvant être suspendu à l'intérieur de la cuve du réacteur (2), l'outil de montage comprenant des moyens télescopiques disposés dans un plan horizontal et portant ou susceptibles de porter l'obturateur de fermeture étanche (20) pour l'insertion à l'intérieur de l'ajutage de branche froide (32), et pour le retrait ultérieur de l'obturateur de fermeture étanche une fois que les opérations d'entretien sont terminées;
– des moyens de verrouillage (58) pour relier l'obturateur de fermeture étanche à l'outil de montage (16);
– des moyens hydrauliques pour actionner l'obturateur de fermeture étanche (20); et
– des moyens de support pour suspendre l'outil de montage (16) à l'intérieur de la cuve du réacteur (20) au cours de l'installation et du retrait de l'obturateur de fermeture étanche;

caractérisé en ce que:
l'obturateur de fermeture étanche (20) comprend une plaque extérieure (46), un ensemble conique (54) et des moyens (49, 56, 57) pour permettre le mouvement relatif de la plaque extérieure (46) et de l'ensemble conique (54), le joint torique primaire (42) étant disposé entre les bords en biseau respectifs de la plaque extérieure (46) et l'extrémité la plus étroite de l'ensemble conique (54) de telle sorte que leur mouvement relatif force le joint torique primaire (42) à se dilater radialement vers l'extérieur, entre les bords respectifs de la plaque extérieure (46) et l'ensemble conique (54); et le joint torique secondaire (44) est disposé près de l'extrémité la plus large de l'ensemble conique pour être situé à l'intérieur de l'ajutage de branche froide (32).

2. Dispositif selon la revendication 1, dans lequel les moyens hydrauliques comportent un vérin hydraulique (36) pour assurer le mouvement relatif entre la plaque extérieure (46) et l'ensemble conique (54), et une pompe hydraulique (38) pour mettre sous pression le vérin hydraulique.

3. Dispositif selon les revendications 1 ou 2, dans lequel les moyens télescopiques de l'outil de montage (16) sont actionnés mécaniquement.

4. Un procédé de fermeture étanche d'un ajutage de branche froide (32) d'une cuve sous pression (2) d'un réacteur nucléaire au cours de l'entretien et de l'inspection de générateurs de vapeur et pompes de refroidissement du réacteur associées pendant que la cuve sous pression et un canal de rechargement en combustible sont remplis d'eau, le procédé consistant essentiellement:

– à relier un obturateur de fermeture étanche (20) muni d'un joint torique primaire (42) et d'un joint torique secondaire (44) à une extrémité d'un outil de montage (16) disposé essentiellement horizontalement, monté au-dessus et en alignement avec la cuve sous pression (2) du réacteur;
– à abaisser l'outil de montage (16) à l'intérieur de la cuve sous pression (2) du réacteur jusqu'à ce que l'outil de montage (16) et l'obturateur associé (20) soient alignés avec l'ajutage de branche froide (32);
– à insérer l'obturateur de fermeture étanche (20) à l'intérieur de l'ajutage de branche froide (32); et
– à dilater de façon mécanique l'obturateur de fermeture étanche (20) pour assurer un joint étanche à l'intérieur d'une partie cylindrique de l'ajutage de branche froide (32);

caractérisé en ce que:
l'obturateur de fermeture étanche (20) comprend une plaque extérieure (46) et un ensemble conique (54) qui sont mobiles l'un par rapport à l'autre et sont mis en place de part et d'autre du joint torique primaire (42), le mouvement relatif entre la plaque extérieure (46) et l'ensemble conique (54) permettant au joint torique primaire (42) situé à l'extrémité la plus étroite de l'ensemble conique de se dilater radialement vers l'extérieur entre les bords en biseau respectifs de la plaque extérieure (46) et l'ensemble conique (54) en contact avec l'ajutage de branche froide (32), et le joint torique secondaire (44) est disposé près de l'extrémité la plus large de l'ensemble conique pour être situé à l'intérieur de l'ajutage de branche froide (32).

FIG. 1

FIG.2

FIG.4

FIG.3

42

44

49

56

53

48

57

50

36

52

51

49

46

54

44

52

51

54

4

4

EP 0 112 073 B2

FIG.5

FIG.6

FIG.7